# EUROPÄISCHE PATENTSCHRIFT

(11) **EP 2 904 423 B1**
(45) Veröffentlichungstag und Bekanntmachung des Hinweises auf die Patenterteilung: **25.10.2017**
(21) Anmeldenummer: 13742471.9
(22) Anmeldetag: 01.08.2013
(51) Int. Cl.: G01S 7/527, G01S 15/00, G01S 15/87, G01S 15/93

(54) **VERFAHREN UND VORRICHTUNG ZUR LATENZZEITOPTIMIERUNG BEI EINER ABSTANDSMESSUNG MITTELS MEHRERER SENSOREN**
METHOD AND DEVICE FOR LATENCY TIME OPTIMIZATION DURING A DISTANCE MEASUREMENT BY MEANS OF A PLURALITY OF SENSORS
PROCÉDÉ ET DISPOSITIF D'OPTIMISATION DE TEMPS DE LATENCE LORS D'UNE MESURE DE DISTANCE À L'AIDE DE PLUSIEURS CAPTEURS

(30) Priorität: 08.10.2012 DE 102012218280
(43) Veröffentlichungstag der Anmeldung: 12.08.2015
(73) Patentinhaber: Robert Bosch GmbH, 70442 Stuttgart (DE)
(72) Erfinder: KLOTZ, Albrecht, 71229 Leonberg (DE); HERING, Michael, 71229 Leonberg (DE); ISKE, Burkhard, 71272 Renningen (DE); HOLTMANN, Tanja, 71272 Renningen (DE); URBAN, Werner, 71665 Vaihingen/Enz (DE)
(86) Internationale Anmeldenummer: PCT/EP2013/066146
(87) Internationale Veröffentlichungsnummer: WO 2014/056646

(56) Entgegenhaltungen:
- EP-A2- 0 952 460
- US-A1- 2006 271 296

## Beschreibung

### Stand der Technik

Die vorliegende Erfindung betrifft ein Verfahren sowie eine Vorrichtung zur Latenzzeitoptimierung bei einer Abstandsmessung mittels mehrerer Sensoren. Insbesondere betrifft die vorliegende Erfindung ein Verfahren sowie eine Vorrichtung zur Latenzzeitoptimierung bei solchen Systemen, bei welchen Sensoren zur Erfassung eines Abstandes grundsätzlich in einer vorbestimmten Reihenfolge auf Empfang geschaltet bzw. abgefragt werden.

Das Dokumente D1 (US 2006/0271296 A1) beschreibt eine Vorrichtung zur Hinderniserkennung. Die Vorrichtung umfasst eine ECU und weist mehrere Empfangseinheiten, z. B. Ultraschallsensoren auf. Die Ultraschallsensoren sind mittels eines Bussystems mit der ECU verbunden. Die ECU ist dazu eingerichtet, die vorgegebene Zeitdauer des Zeitsignals einzustellen. Wenn die Anzahl der erfassten Ultraschallsignale eines Ultraschallsensors die Anzahl drei erreicht, wird festgestellt, dass ein Hindernis im Bereich der von diesem Ultraschallsensor überblickt wird, erfasst worden ist. Daraufhin wird ein Indikator angesteuert, der den Fahrer von der Existenz des Hindernisses unterrichtet.

Das Dokument D2 (EP 0952460 A2) beschreibt ein Hindernis Erfassungsystem für Fahrzeuge. Die Vorrichtung weist hierbei mehrere Ultraschallsensoren, sowie zwei elektromagnetische Sensoren auf. Das bedeutet, dass System weist zwei unterschiedliche Arten von Sensoren auf. Im Mikroprozessor sind zur Verwendung der Vorrichtung verschiedene Fälle hinterlegt, wobei für diese Fälle jeweils eine bestimmte Empfangsreihenfolge der Ultraschallsensoren inklusive elektromagnetischer Sensoren abgelegt sind.

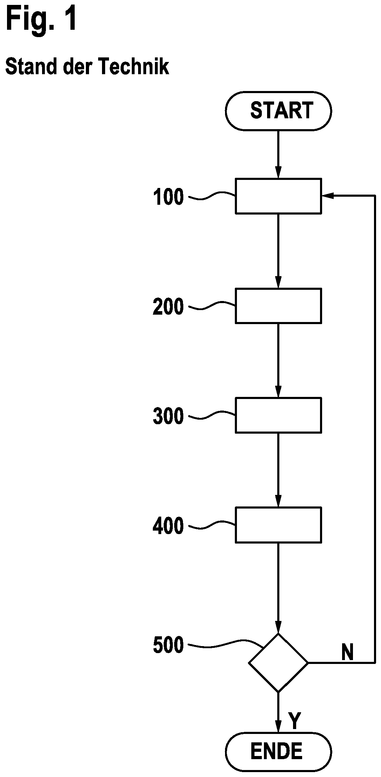

Ultraschallsysteme zur Abstandsmessung mittels mehrerer Ultraschallsensoren (Ultraschallsendeempfänger) sind im Stand der Technik sowie im automobilen Serieneinsatz weit verbreitet. Zumindest fungieren die Ultraschallsensoren dabei einerseits als Ultraschallsender, wobei sie Ultraschallsignale in die Umgebung abstrahlen, und als Ultraschallempfänger, wobei sie Echos der von Umgebungsobjekten reflektierten Signale aufnehmen und zur Auswertung weiterleiten. Um ein möglichst umfassendes Bild der Umgebung zu erhalten, werden die Sensoren im Stand der Technik gemäß einer vorgegebenen Reihenfolge abgefragt, wodurch sämtliche Bereiche des zu testenden Feldes (area of view) gleichberechtigt gewichtet werden. Da auch Ultraschallsignale, welche nicht als Echo von Umgebungsobjekten am Ultraschallsensor eintreffen (d.h. Störsignale), als Echos fehlinterpretiert werden können, werden im Stand der Technik mehrere Echos abgewartet, um ein als Echo klassifiziertes Erstsignal zunächst zu verifizieren, und erst anschließend den Eingang eines Echos zu melden. Sofern ein System vier Ultraschallsensoren umfasst, wie sie beispielsweise an einem Stoßfänger eines Fahrzeugs angeordnet sein könnten, müssen sämtliche vier Sensoren jeweils einmal empfangen, bis ein zuvor empfangenes Signal erstmals repliziert werden kann. Da im Stand der Technik mitunter drei Empfangsvorgänge üblich sind, bevor ein empfangenes Echo endgültig als solches klassifiziert wird, sind bei vier Ultraschallsensoren im Sensorverbund neun Empfangsvorgänge erforderlich, bis ein erster Sensor dreifach empfangen hat und ein bereits beim ersten Empfangsvorgang vermutetes Echo erfolgreich verifiziert sein kann. In Abhängigkeit der Dauer eines Empfangsvorgangs kann hierbei wertvolle Zeit vergehen, bis eine interessierende Situation im Sichtfeld des Systems zuverlässig erfasst ist und bewertet werden kann. Figur 1 zeigt ein solches Szenario. Nach dem Starten des Verfahrens wird in Schritt 100 ein erster Sensor abgefragt bzw. ein vermeintliches Echo empfangen. Anschließend werden in den Schritten 200, 300 und 400 ein zweiter, ein dritter und ein vierter Sensor auf Empfang geschaltet, bis in Schritt 500 entschieden wird, ob ein Abbruchkriterium erfüllt ist. Ist dies nicht der Fall (N), beginnt das Verfahren mit Schritt 100 erneut, mittels des ersten Sensors Signale zu empfangen und ggf. das während des ersten Zyklus' empfangene Signal erstmalig zu verifizieren. Anschließend durchläuft das Verfahren erneut die Schritte 200, 300 und 400, und unter der Bedingung, dass die Abbruchsbedingung erneut nicht erfüllt ist (N), wird ein weiteres Mal in Schritt 100 der erste Schritt abgefragt und das empfangene Signal endgültig verifiziert oder andernfalls falsifiziert. Sofern in Schritt 500 das Abbruchkriterium erfüllt ist (Y), endet das Verfahren.

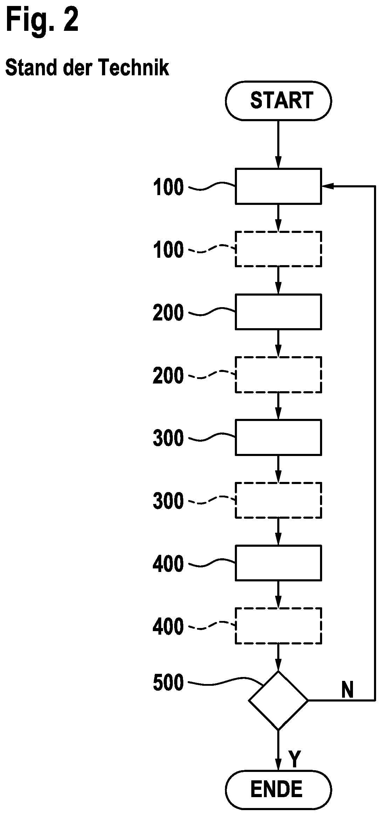

Gemäß einer bekannten Weiterbildung zur Verringerung der Latenzzeit bei einer Abstandsmessung mittels mehreren Sensoren werden einzelne Sensoren in Abhängigkeit des von ihnen gelieferten Signals bzw. Ergebnisses erneut abgefragt, bevor das Verfahren gemäß der vordefinierten Reihenfolge mit dem Abfragen weiterer im Verbund vorhandener Sensoren fortfährt. Ein solches Verfahren ist beispielhaft in Figur 2 veranschaulicht. Dabei wird in Schritt 100 zunächst - wie zuvor in Verbindung mit Figur 1 beschrieben - ein erster Sensor im Verbund abgefragt. In Abhängigkeit des Ergebnisses, beispielsweise wenn ein vermeintliches Echo empfangen worden ist, kann in einem darauffolgenden Schritt (gestrichelt dargestellt) der erste Sensor erneut abgefragt werden (Schritt 100), bevor in Schritt 200 (gestrichelt) ein weiterer Sensor gemäß der vordefinierten Reihenfolge abgefragt wird. Auch die Abfrage des zweiten Sensors kann in Abhängigkeit des empfangenen Signals bzw. des Auswerteergebnisses wiederholt werden (Schritt 200, gestrichelt). Entsprechendes gilt für die Abfrage eines dritten Sensors in Schritt 300 und die Abfrage eines vierten Sensors in Schritt 400. Die vordefinierte Reihenfolge zur Abfrage der im Verbund vorhandenen Sensoren erlaubt somit gemäß dem Stand der Technik ein vereinzeltes Wiederholen von Messungen mittels eines unmittelbar zuvor verwendeten Sensors, um die Latenzzeit bis zur Verifikation eines Abstandsmessergebnisses zu verringern.

Jedoch ist auch die auf diese Weise erreichte Latenzzeit bis zur Verifikation eines Messergebnisses nicht vollständig zufriedenstellend und insbesondere für Systeme mit einer hohen Anzahl von Sensoren besteht der Bedarf nach einer geringeren Gesamtlatenzzeit.

### Offenbarung der Erfindung

Die vorstehend genannte Aufgabe wird erfindungsgemäß gelöst durch ein Verfahren zur Latenzzeitoptimierung mit den Merkmalen gemäß Anspruch 1. Des Weiteren wird die vorstehend genannte Aufgabe gelöst durch eine Vorrichtung mit den Merkmalen gemäß Anspruch 6. Entsprechend wird ein Verfahren zur Latenzzeitoptimierung bei einer Abstandsmessung mittels mehrerer, insbesondere auf Ultraschallbasis arbeitender, Sensoren vorgeschlagen. Die Sensoren können als Ultraschallsendeempfänger ausgestaltet und an einem Bussystem (z.B. CAN-Bus) angeschlossen sein, welches mit einem Steuergerät verbunden ist. Alternativ können die Sensoren auch diskret, also über einzelne Leitungen, mit dem Steuergerät (z.B. eine Auswerteeinheit) verbunden sein. Mittels eines ersten Sensors wird ein Empfangsvorgang vorgenommen und ein gegebenenfalls empfangenes Signal ausgewertet. Mit anderen Worten wird der erste Sensor in einem Empfangsmodus betrieben und ein gegebenenfalls eintreffendes Echo als elektrisches Signal abgebildet und/oder ausgewertet. Unter einer Auswertung sei somit eine Interpretation dahingehend verstanden, ob und zu welchem Zeitpunkt ein Echo im Empfangsintervall an dem jeweils betrachteten Sensor eingeht. Eine solche Interpretation kann dabei entweder in dem Sensor selbst (intelligenter Sensor) oder alternativ in einem z.B. über ein Bus-System angeschlossenen elektronischen Steuergerät vorgenommen werden. Erfindungsgemäß wird abhängig von einem vordefinierten Auswerteergebnis von einer vordefinierten Empfangsreihenfolge abgewichen, indem mittels eines anderen Sensors empfangen wird. Ein vordefiniertes Auswerteergebnis kann dabei beispielsweise dann vorliegen, wenn ein Echo vorliegt oder die Auswertung des Echos darauf schließen lässt, dass ein Gegenstand einen kritischen Abstand zum Sensor bzw. zum Fahrzeug unterschritten hat. Alternativ oder zusätzlich kann auch eine Näherungsgeschwindigkeit oder eine Zeitdauer bis zu einer bevorstehenden Kollision ermittelt werden und anhand eines Schwellenwertes bewertet werden. Sofern ein derart vordefiniertes Auswerteergebnis vorliegt, kann erfindungsgemäß von einer vordefinierten Empfangsreihenfolge dadurch abgewichen werden, dass ereignisbasiert ein Empfangsvorgang mittels eines zweiten Sensors "eingeschoben" wird, so dass ein gemäß der voreingestellten Empfangsreihenfolge als nächstes zu verwendender Sensor vorübergehend zurückgestellt wird. Dabei kann das vordefinierte Auswerteergebnis im Rahmen eines unmittelbar zuvor ermittelten Abstandes erzielt worden sein, oder auf Basis eines oder mehrerer weiter zurückliegenden Empfangsvorgangs bzw. Empfangsvorgänge vorliegen. Unter einer Empfangsreihenfolge sei somit eine Abfolge zum Empfangen (bzw. auch zum Senden) verwendeter physikalischer Sensoren verstanden, wobei ein Wiederholen eines Messvorgangs mittels ein und desselben Sensors nicht die Empfangsreihenfolge beeinflusst. Das erfindungsgemäße Verfahren ermöglicht daher eine weitaus flexiblere und besser ereignisbasierte Verwendung eines Verbundes von Sensoren in einem System zur Abstandsmessung. Latenzzeiten bis zur Erkennung eines interessierenden Abstandes verringern sich und die Fahrsicherheit (bei Fahrzeug-basierten Abstandsmesssystemen) erhöht sich. Darüber hinaus ist auch ein höherer Fahrkomfort bei Systemen zur automatischen Bewegung eines Fahrzeugs durch rechtzeitige Erkennung von Hindernissen im Fahrzeugumfeld möglich.

Die Unteransprüche zeigen bevorzugte Weiterbildungen der Erfindung. Bevorzugt kann der ereignisbasiert ausgewählte zweite Sensor auf Grundlage eines vorherigen Auswerteergebnisses ausgewählt werden. Gemäß den obigen Ausführungen würde somit das Auswerteergebnis auf Grundlage des unmittelbar zuvor verwendeten ersten Sensors erzielt worden sein, in Ansprechen worauf von der vordefinierten Reihenfolge abgewichen wird, indem nun (anschließend) mittels des zweiten Sensors Messsignale aus der Fahrzeugumgebung empfangen werden. Bevorzugt kann das besagte Auswerteergebnis zudem dafür verwendet werden, eine Anzahl von Wiederholungen eines Empfangsvorgangs mittels des zweiten Sensors festzulegen. Mit anderen Worten kann im Rahmen der Interpretation des vorherigen Auswerteergebnisses festgelegt werden, ob lediglich eine Messung mittels des zweiten Sensors vorgenommen wird, bevor zur vordefinierten Reihenfolge zurückgekehrt wird, oder zwei, drei oder mehr Empfangsvorgänge mittels des zweiten Sensors "eingeschoben" werden. Dies bietet den Vorteil, dass im Ansprechen auf höchst relevante Auswerteergebnisse, welche mittels des zweiten Sensors erzielt werden können, weniger Zeit vergeht, bis ein erhaltenes Auswerteergebnis verifiziert ist und weiterverwendet werden kann.

Dabei kann eine Auswerteeinheit festlegen, dass bis zur Verwertung eines einzelnen Ergebnisses eines jeweiligen Sensors eine einfache, zweifache, dreifache oder vierfache Verifikation mittels desselben Sensors erforderlich ist, bis dieses Ergebnis als "verlässlich" eingestuft wird. Auf diese Weise erhöht sich die Robustheit gegenüber Ultraschallsignalen aus der Umwelt des Sensorsystems, welche nicht als Echos gesendeter Signale auf den Sensoren eintreffen.

Gemäß einem weiteren Aspekt der vorliegenden Erfindung wird eine Vorrichtung zur Abstandsmessung vorgeschlagen, welche insbesondere in einem Fahrzeug verbaut sein kann. Dabei umfasst die Vorrichtung einen ersten und einen zweiten Sensor, mittels welcher beispielsweise Ultraschallsignale in die Umgebung der Vorrichtung gesendet werden können, zumindest jedoch aus der Umgebung empfangen werden können. Bekannte Ultraschallsensoren, auf welche die vorliegende Erfindung angewendet werden kann, sind beispielsweise in Gruppen zu je vier Sensoren in den Stoßfängern von Personenkraftwagen (Pkw) zu finden. Über eine jeweils einzelne oder eine gemeinsame Kommunikationsleitung (z.B. CAN, LIN- oder PSI-Bus) sind die Sensoren mit einer Auswerteeinheit verbunden, welche eingerichtet ist, Signale zum Aussenden zu generieren und den Sensoren zur Verfügung zu stellen und mittels der Sensoren empfangene Echos auszuwerten und ermittelte Ergebnisse an den Anwender des Fahrzeugs oder weitere Einrichtungen im Fahrzeug (Fahrroboter, Einparkassistenzsystem) zu melden. Erfindungsgemäß ist die Vorrichtung eingerichtet, von Umgebungsobjekten reflektierte Messsignale mittels des ersten Sensors zu empfangen und mittels der Auswerteeinheit auszuwerten, wobei abhängig von einem vordefinierten Auswerteergebnis von einer voreingestellten Empfangsreihenfolge abgewichen wird, indem der zweite Sensor eingerichtet wird, ein Messsignal zu empfangen. Mit anderen Worten ist gemäß einer voreingestellten Reihenfolge von für eine Abstandsmessung vorgesehenen Ultraschallsensoren dadurch abgewichen worden, dass anstatt eines vorgesehenen Sensors nun der zweite Sensor "eingeschoben" wird, um einen nachfolgenden Empfangsvorgang durchzuführen. Es gelten hier die hin Verbindung mit dem erstgenannten Aspekt der vorliegenden Erfindung gemachten Ausführungen entsprechend auch für die erfindungsgemäße Vorrichtung.

Weiter bevorzugt umfasst die Vorrichtung mindestens einen dritten Sensor, insbesondere auch einen vierten Sensor, wobei die voreingestellte Empfangsreihenfolge nach dem Empfangen mittels des ersten Sensors ungeachtet des Auswerteergebnisses (z.B. wenn kein Echo mittels des ersten Sensors empfangen worden ist) ein Empfangen mittels eines dritten Sensors der Vorrichtung vorsieht. Auf diese Weise ist die erfindungsgemäße Vorrichtung eingerichtet, ereignisbasiert solche Ausschnitte des Sensorfeldes bevorzugt und höherfrequentig abzutasten, in welchen gemäß den Auswerteergebnissen schnellere, wichtigere oder interessantere Abstandsmessergebnisse zu erwarten sind.

Gemäß einem weiteren Aspekt der vorliegenden Erfindung wird ein Fahrerassistenzsystem, umfassend eine oben diskutierte Vorrichtung, vorgeschlagen, welche eingerichtet ist, einen Fahrer eines Fahrzeugs über die Ergebnisse einer Abstandsmessung optisch und/oder akustisch zu informieren.

Gemäß einem weiteren Aspekt der vorliegenden Erfindung wird ein Fahrroboter vorgeschlagen, welcher eine oben diskutierte Vorrichtung umfasst. Im Ansprechen auf die mittels der Vorrichtung ermittelten Abstandsmessergebnisse ist der Fahrroboter eingerichtet, selbständig Fahrzeugbewegungen einzuleiten, eine Fahrtrichtung zu ändern und die Fahrzeugbewegungen zu stoppen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: ein Ablaufdiagramm zur Abstandsmessung mittels mehrerer Sensoren, visualisierend Schritte, die aus dem Stand der Technik bekannt sind;
- Figur 2: ein Ablaufdiagramm zur Abstandsmessung mittels mehrerer Sensoren, visualisierend zusätzliche Schritte, wie sie aus dem Stand der Technik bekannt sind;
- Figur 3: eine schematische Systemübersicht eines Ausführungsbeispiels für eine Vorrichtung gemäß der vorliegenden Erfindung; und
- Figur 4: ein Ablaufdiagramm, visualisierend Schritte eines Ausführungsbeispiels eines erfindungsgemäßen Verfahrens.

### Ausführungsformen der Erfindung

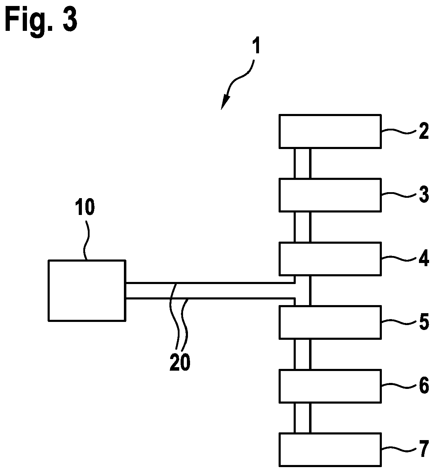

Figur 3 zeigt ein Ausführungsbeispiel für eine Vorrichtung 1 zur Abstandsmessung, in welchem sechs Ultraschallsensoren 2-7 mittels eines LIN-Bussystems 20 als Kommunikationsschnittstelle mit einem elektronischen Steuergerät 10 als Auswerteeinheit verbunden sind. Dabei ist die Auswerteeinheit 10 eingerichtet, über das LIN-Bussystem 20 einzelne Sensoren 2-7 mit Signalen zu beaufschlagen und diese somit zum Aussenden von Ultraschallsignalen zu veranlassen. Diese Beaufschlagung mittels Sendesignalen kann gemäß einer vorgegebenen Reihenfolge erfolgen, welche für den Fall, dass keine vordefinierten Auswerteergebnisse mittels der Sensoren 2-7 empfangen werden, vorgesehen ist. Eine ebensolche Reihenfolge kann für die Sensoren 2-7 durch die Auswerteeinheit 10 für die entsprechenden Empfangsvorgänge vorgegeben sein. Mit anderen Worten veranlasst die Auswerteeinheit 10 die Sensoren 2-7, gemäß einer vordefinierten Reihenfolge Echosignale aus der Fahrzeugumgebung zu erwarten, sofern keine vordefinierten Auswerteergebnisse vorliegen. Wenn beispielsweise aufgrund eines Signals, welches mittels des ersten Ultraschallsensors 2 aufgenommen und an die Auswerteeinheit 10 weitergeleitet worden ist, ermittelt wird, dass das Fahrzeug einem Umgebungsobjekt sehr nahegekommen ist und/oder sich einem solchen Objekt sehr schnell nähert, kann die Auswerteeinheit 10 veranlassen, dass ein weiterer Empfangsvorgang mittels des ersten Ultraschallsensors 2 gestartet wird. Sofern die vorgegebene Reihenfolge beispielsweise vorsieht, dass anschließend mittels des vierten Ultraschallsensors 5 ein anderer Bereich des Fahrzeugumfeldes nach Echosignalen "abgetastet" wird, kann die Auswerteeinheit 10 veranlassen, zur Sicherheit zunächst den zweiten Ultraschallsensor 3 auf Empfang zu schalten, um weitere Aufschlüsse über die Geometrie und die Relativbewegung des Umgebungsobjektes zu erhalten.

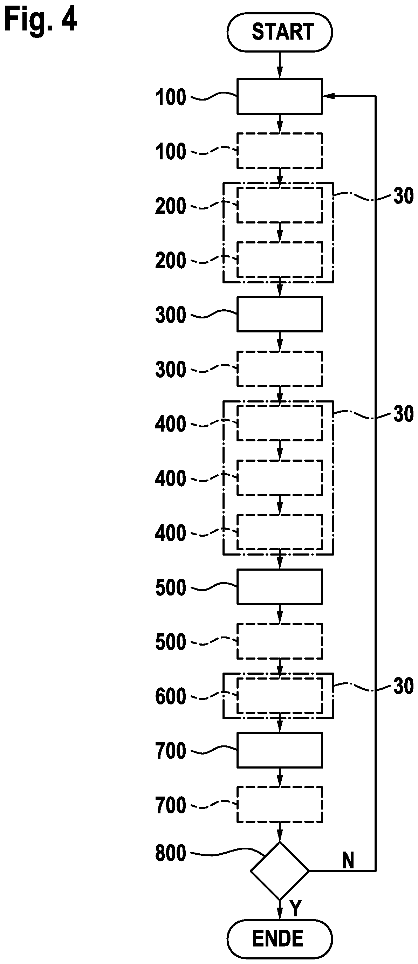

Figur 4 zeigt ein Ablaufdiagramm für ein Ausführungsbeispiel eines erfindungsgemäßen Verfahrens, in welchem die erfindungsgemäß eingefügten Schritte durch Strichpunktkästen 30 hervorgehoben sind. Wie in Verbindung mit den Figuren 1 und 2 ausgeführt, startet auch das erfindungsgemäße Verfahren mit einem Empfangsvorgang 100, der mittels eines ersten Sensors 2 durchgeführt wird. Optional (gestrichelt) kann in Abhängigkeit des Auswerteergebnisses, welches auf dem Empfangssignal des ersten Sensors 2 basiert, ein weiterer Empfangsvorgang mittels des ersten Sensors 2 vorgenommen werden. Sofern das Auswerteergebnis dazu führt, dass ein Empfangsvorgang mittels eines zweiten Sensors 3 abweichend von einer vordefinierten Reihenfolge wichtige Aufschlüsse über die Fahrzeugsituation ergeben könnte, kann in Schritt 200 ereignisbasiert ein Empfangsvorgang mittels eines zweiten Sensors 3 vorgenommen werden (gestrichelt dargestellt) und in einem weiteren (gestrichelt dargestellten) Empfangsvorgang 200 verifiziert werden. Nach dem Empfangen mittels des zweiten Sensors 3 kehrt das erfindungsgemäße Verfahren in Schritt 300 zur ursprünglichen Empfangsreihenfolge zurück, wobei auch der Empfangsvorgang mittels des dritten Sensors 4 in Schritt 300 (gestrichelt dargestellt) wiederholt werden kann. Erfindungsgemäß kann in Abhängigkeit eines vorangegangenen Auswerteergebnisses in dem darauffolgenden Schritt 400 (gestrichelt dargestellt) abweichend von einer vordefinierten Reihenfolge ein Empfangsvorgang mittels eines vierten Sensors 5 durchgeführt werden. Wäre beispielsweise nach dem Schritt 300 ohne entsprechende Auswerteergebnisse vorgesehen gewesen, in Schritt 500 mittels eines fünften Sensors 6 das Fahrzeugumfeld abzutasten, so würde ein Durchführen des Schrittes 500 nach dem Schritt 300 der vordefinierten Reihenfolge entsprechen. Im Beispiel wird unabhängig von dem Ergebnis des Empfangsvorgangs mittels des vierten Sensors 5 im Schritt 400 (gestrichelt dargestellt) der ("verschobene") Schritt 500 durchgeführt, in welchem das Fahrzeugumfeld mittels eines fünften Sensors 6 abgetastet und das Ergebnis in Abhängigkeit eines vorangegangenen Auswerteergebnisses in Schritt 500 (gestrichelt dargestellt) verifiziert wird. Nach dem gestrichelt dargestellten Schritt 500 weicht das erfindungsgemäße Verfahren erneut ereignisbasiert von der vordefinierten Reihenfolge ab, indem in Schritt 600 (gestrichelt dargestellt) mittels eines sechsten Sensors eine einmalige Messung vorgenommen wird. Anschließend kehrt das Verfahren zur vordefinierten Reihenfolge zurück, indem in Schritt 700 beispielsweise ein weiterer Empfangsvorgang vorgenommen und dieser anschließend in Schritt 700 (gestrichelt dargestellt) wiederholt wird. In Schritt 800 wird entschieden, ob ein vordefiniertes Abbruchkriterium erfüllt ist (Y). Falls das Kriterium nicht erfüllt ist (N), beginnt das Verfahren gemäß dem dargestellten Ausführungsbeispiel in Schritt 100 erneut, indem mittels des ersten Sensors 2 Umgebungssignale empfangen werden. Ist das vordefinierte Kriterium erfüllt (Y), endet das Verfahren.

Sämtliche in Figur 4 gestrichelt dargestellten Verfahrensschritte sind optional, d.h. nicht notwendigerweise durchzuführen. Dabei wird eine einfache Wiederholung einer regulären Messung (z.B. gestrichelt dargestellter Schritt 100 nach durchgezogen dargestelltem Schritt 100) nicht erfindungsgemäß als ein Abweichen einer Empfangsreihenfolge erachtet. Erst ein Einschieben gemäß der vordefinierten Empfangsreihenfolge nicht vorgesehener Sensoren, wie dies durch die Strichpunktkästen 30 in Fig. 4 visualisiert ist, unterscheidet das Verfahren gemäß der vorliegenden Erfindung vom Stand der Technik. Dabei ist zu beachten, dass selbstverständlich nicht lediglich ein Sensor zwischen zwei gemäß einer vordefinierten Reihenfolge vorgesehene Sensoren eingefügt werden kann, sondern beispielsweise die gestrichelt dargestellten Schritte 400 eine Messung mittels eines vierten Sensors und zwei nachfolgende Empfangsvorgänge mittels eines anderen, nicht Reihenfolge-konformen Sensors bedeuten können. Selbstverständlich könnte auch eine Verifikation des Ergebnisses des vierten Sensors erfolgen und anschließend nur eine weitere Messung mittels des anderen, nicht Reihenfolge-konformen Sensors vorgenommen werden. Erfindungswesentlich ist somit ein Einschieben mindestens einer Messung mit einem Sensor, welcher gemäß der vordefinierten Reihenfolge nicht vorgesehen ist. Ein Einschieben mehrerer Empfangsvorgänge mittels desselben oder unterschiedlicher Sensoren, welche sämtlich nicht gemäß der vordefinierten Reihenfolge zu diesem Zeitpunkt bzw. auf diesem Rang vorgesehen sind, ist ebenfalls als dem Schutzbereich der vorliegenden Erfindung zugehörig zu erachten.

Es ist ein Kerngedanke der vorliegenden Erfindung, eine Latenzzeit bis zum Erkennen eines Objektes mittels mehrerer, gemäß einer vordefinierten Reihenfolge, verwendeter Sensoren zu verringern, indem Verifikationsmessungen zeitlich enger aufeinanderfolgend vorgenommen werden können, indem von der vordefinierten Empfangsreihenfolge mittels der Sensoren abgewichen wird.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

## Patentansprüche

1. Verfahren zur Latenzzeitoptimierung bei einer Abstandsmessung mittels mehrerer, auf Ultraschallbasis arbeitender Sensoren (2-7), wobei das Verfahren die Schritte umfasst:
- Empfangen und Auswerten eines Messsignals mittels eines ersten Sensors (2), **dadurch gekennzeichnet, dass** abhängig vom Vorliegen eines vordefinierten Auswerteergebnis, von einer voreingestellten Empfangsreihenfolge durch Empfangen mittels eines zweiten Sensors (3) abgewichen wird, so dass ein gemäß der voreingestellten Empfangsreihenfolge als nächstes zu verwendender Sensor vorübergehend zurückgestellt wird.

2. Verfahren nach Anspruch 1, wobei die voreingestellte Empfangsreihenfolge nach dem Empfangen mittels des ersten Sensors (2) ungeachtet des Auswerteergebnisses ein Empfangen mittels eines dritten Sensors (4) vorsieht.

3. Verfahren nach Anspruch 1 oder 2, wobei der zweite Sensor (3), insbesondere auch eine Anzahl von Wiederholungen des Empfangsvorgangs mittels des zweiten Sensors (3), auf Grundlage eines vorherigen Auswerteergebnisses, insbesondere auf Grundlage des mittels des ersten Sensors (2) empfangenen Messsignals, ausgewählt wird.

4. Verfahren nach einem der vorstehenden Ansprüche, wobei für ein Abstandsmessergebnis eine minimale Anzahl von Auswerteergebnissen eines jeweiligen Sensors (2-7) erforderlich ist, wobei die Anzahl 2, 3, 4 oder 5 ist.

5. Verfahren nach einem der vorstehenden Ansprüche, wobei das vordefinierte Auswerteergebnis auf einen vordefinierten maximalen Abstand und/oder auf eine vordefinierte maximale Verringerung des Abstandes pro Zeiteinheit oder entsprechende Kenngrößen schließen lässt.

6. Vorrichtung zur, insbesondere fahrzeugbasierten, Abstandsmessung umfassend
einen ersten Ultraschallsensor (2),
einen zweiten Ultraschallsensor (3), und
eine Auswerteeinheit (10),
wobei die Vorrichtung (1) eingerichtet ist, von Umgebungsobjekten reflektierte Messsignale mittels des ersten Sensors (2) zu empfangen und mittels der Auswerteeinheit (10) auszuwerten, **dadurch gekennzeichnet, dass** abhängig von einem vordefinierten Auswerteergebnis von einer voreingestellten Empfangsreihenfolge abgewichen wird, so dass ein gemäß der voreingestellten Empfangsreihenfolge als nächstes zu verwendender Sensor vorübergehend zurückgestellt wird, indem der zweite Sensor (3) eingerichtet wird, ein Messsignal zu empfangen.

7. Vorrichtung nach Anspruch 6, wobei die Vorrichtung (1) weiter einen dritten Sensor (4) umfasst, und wobei die voreingestellte Empfangsreihenfolge nach dem Empfangen mittels des ersten Sensors (2) ungeachtet des Auswerteergebnisses ein Empfangen mittels eines dritten Sensors (4) der Vorrichtung vorsieht.

8. Vorrichtung nach einem der Ansprüche 6 oder 7, wobei die Vorrichtung (1) eingerichtet ist, den zweiten Sensor (3), insbesondere auch eine Anzahl von Wiederholungen des Empfangsvorgangs mittels des zweiten Sensors (3), auf Grundlage eines vorherigen Auswerteergebnisses, insbesondere auf Grundlage des mittels des ersten Sensors (2) empfangenen Messsignals, auszuwählen.

9. Vorrichtung nach einem der Ansprüche 6 bis 8, wobei für ein Abstandsmessergebnis eine minimale Anzahl von Auswerteergebnissen eines jeweiligen Sensors (2-7) erforderlich ist, wobei die Anzahl 2, 3, 4 oder 5 ist.

10. Vorrichtung nach einem der Ansprüche 6 bis 9, wobei das vordefinierte Auswerteergebnis auf einen vordefinierten maximalen Abstand und/oder auf eine vordefinierte maximale Verringerung des Abstandes pro Zeiteinheit oder entsprechende Kenngrößen schließen lässt.

## Claims

1. Method for latency time optimization during a distance measurement by means of a plurality of sensors (2-7) operating in a manner based on ultrasound, the method comprising the steps of:
- receiving and evaluating a measurement signal by means of a first sensor (2),
**characterized in that**
there is a deviation from a preset receive sequence by reception by means of a second sensor (3) on the basis of the presence of a predefined evaluation result, with the result that a sensor to be used next according to the preset receive sequence is temporarily put aside.

2. Method according to Claim 1, the preset receive sequence providing for reception by means of a third sensor (4) after the reception by means of the first sensor (2) irrespective of the evaluation result.

3. Method according to Claim 1 or 2, the second sensor (3), in particular also a number of repetitions of the receive operation by means of the second sensor (3), being selected on the basis of a previous evaluation result, in particular on the basis of the measurement signal received by means of the first sensor (2).

4. Method according to one of the preceding claims, a minimum number of evaluation results from a respective sensor (2-7) being required for a distance measurement result, the number being 2, 3, 4 or 5.

5. Method according to one of the preceding claims, the predefined evaluation result indicating a predefined maximum distance and/or a predefined maximum reduction in the distance per unit time or corresponding characteristic variables.

6. Apparatus for distance measurement, in particular vehicle-based distance measurement, comprising
a first ultrasonic sensor (2),
a second ultrasonic sensor (3), and
an evaluation unit (10),
the apparatus (1) being set up to receive measurement signals reflected by environment objects by means of the first sensor (2) and to evaluate said signals by means of the evaluation unit (10), **characterized in that** there is a deviation from a preset receive sequence on the basis of a predefined evaluation result, with the result that a sensor to be used next according to the preset receive sequence is temporarily set aside by setting up the second sensor (3) to receive a measurement signal.

7. Apparatus according to Claim 6, the apparatus (1) also comprising a third sensor (4), and the preset receive sequence providing for reception by means of a third sensor (4) after the reception by means of the first sensor (2) irrespective of the evaluation result.

8. Apparatus according to either of Claims 6 and 7, the apparatus (1) being set up to select the second sensor (3), in particular also a number of repetitions of the receive operation by means of the second sensor (3), on the basis of a previous evaluation result, in particular on the basis of the measurement signal received by means of the first sensor (2).

9. Apparatus according to one of Claims 6 to 8, a minimum number of evaluation results from a respective sensor (2-7) being required for a distance measurement result, the number being 2, 3, 4 or 5.

10. Apparatus according to one of Claims 6 to 9, the predefined evaluation result indicating a predefined maximum distance and/or a predefined maximum reduction in the distance per unit time or corresponding characteristic variables.

## Revendications

1. Procédé permettant, lors d'une mesure de distance effectuée à l'aide de plusieurs capteurs (2-7) fonctionnant sur la base d'ultrasons, d'optimiser le temps de latence, dans lequel le procédé comprend les étapes consistant à :
- recevoir et évaluer un signal de mesure à l'aide d'un premier capteur (2), **caractérisé en ce que**, en fonction de la présence d'un résultat d'évaluation prédéfini, il se produit un écart par rapport à une séquence de réception préréglée obtenue par réception à l'aide d'un deuxième capteur (3), de telle sorte qu'un capteur est rétabli temporairement en tant que capteur devant être utilisé ensuite conformément à la séquence de réception préréglée.

2. Procédé selon la revendication 1, dans lequel la séquence de réception préréglée prévoit, après la réception effectuée à l'aide du premier capteur (2), une réception effectuée à l'aide d'un troisième capteur (4) malgré le résultat de l'évaluation.

3. Procédé selon la revendication 1 ou 2, dans lequel le deuxième capteur (3) est sélectionné, ainsi que notamment un nombre de répétitions du processus de réception effectué à l'aide du deuxième capteur (3), sur la base d'un résultat d'évaluation précédent, notamment sur la base du signal de mesure reçu à l'aide du premier capteur (2).

4. Procédé selon l'une quelconque des revendications précédentes, dans lequel, pour un résultat de mesure de distance, un nombre minimal de résultats d'évaluation d'un capteur (2-7) respectif est nécessaire, dans lequel ledit nombre est égal à 2, 3, 4 ou 5.

5. Procédé selon l'une quelconque des revendications précédentes, dans lequel le résultat d'évaluation prédéfini permet d'établir une distance maximale prédéfinie et/ou une diminution maximale prédéfinie de la distance par unité de temps ou des grandeurs caractéristiques correspondantes.

6. Dispositif permettant d'effectuer une mesure de distance, notamment ayant pour base un véhicule, comprenant
un premier capteur à ultrasons (2),
un deuxième capteur à ultrasons (3), et
une unité d'évaluation (10),
dans lequel le dispositif (1) est conçu pour recevoir à l'aide du premier capteur (2) des signaux de mesure réfléchis par des objets situés dans l'environnement et pour les évaluer à l'aide de l'unité d'évaluation (10), **caractérisé en ce que**, en fonction d'un résultat d'évaluation prédéfini, il se produit un écart par rapport à une séquence de réception préréglée, de telle sorte qu'un capteur est rétabli temporairement en tant que capteur devant être utilisé ensuite conformément à la séquence de réception préréglée, le deuxième capteur (3) étant configuré pour recevoir un signal de mesure.

7. Dispositif selon la revendication 6, dans lequel le dispositif (1) comprend en outre un troisième capteur (4), et dans lequel la séquence de réception préréglée prévoit, après la réception effectuée à l'aide du premier capteur (2), une réception effectuée au moyen d'un troisième capteur (4) du dispositif malgré le résultat de l'évaluation.

8. Dispositif selon l'une quelconque des revendications 6 ou 7, dans lequel le dispositif (1) est conçu pour sélectionner le deuxième capteur (3), ainsi que notamment un nombre de répétitions du processus de réception effectué à l'aide du deuxième capteur (3), sur la base d'un résultat d'évaluation précédent, notamment sur la base du signal de mesure reçu à l'aide du premier capteur (2).

9. Dispositif selon l'une quelconque des revendications 6 à 8, dans lequel, pour un résultat de mesure de distance, un nombre minimal de résultats d'évaluation d'un capteur (2-7) respectif est nécessaire, dans lequel ledit nombre est égal à 2, 3, 4 ou 5.

10. Dispositif selon l'une quelconque des revendications 6 à 9, dans lequel le résultat d'évaluation prédéfini permet d'établir une distance maximale prédéfinie et/ou une diminution maximale prédéfinie de la distance par unité de temps ou des grandeurs caractéristiques correspondantes.
